# EUROPEAN PATENT APPLICATION

(11) **EP 1 990 282 A2**
(43) Date of publication of application: **12.11.2008**
(21) Application number: 08014358.9
(22) Date of filing: 31.10.2001
(51) Int. Cl.: B65B 63/08, B29B 13/02, C09J 11/00

(54) **Packaging of low application hot melt adhesive formulations**

(30) Priority: 04.11.2000 US 706448
(62) Divisional of application: 01998023.4
(71) Applicant: National Starch and Chemical Investment Holding Corporation, New Castle, Delaware 19720 (US)
(72) Inventor: Paul, Charles, W., Madison, NJ 07940 (US); Rodgers, Anthony, P., Warwickshire CV23 ODZ (GB)
(74) Representative: Letzelter, Felix Phillip

(57) **Abstract**

Films having a melting point below about 100°C are used to package low temperature hot melt adhesives. The packaging film does not require removal prior to use of the adhesive. The packaged adhesive is easy to handle and units are non-blocking.

## Description

### FIELD OF THE INVENTION

The invention relates to a method for packaging low temperature hot melt adhesive compositions and to the resulting packaged adhesive compositions.

### BACKGROUND OF THE INVENTION

Hot melt adhesives, which are generally applied while in the molten or liquid state are, solid at room temperature. Typically, these adhesives are provided in the form of blocks and because of the nature of these materials, particularly the pressure sensitive hot melts, there are problems associated with handling and packaging them. The solid adhesive blocks not only stick or adhere to hands or mechanical handling devices but also to each other. They also pick up dirt and other contaminants. Additionally, certain applications which require high tack formulations result in blocks that will deform or cold flow unless supported during shipment.

The need and advantages for providing tackless or non-blocking hot melt adhesives are apparent and various ways of accomplishing this have been developed. While most of these prior art methods have provided some degree of improvement in the packaging and handling of hot melt adhesives, they have suffered by virtue of either the need to unwrap or otherwise unpackage the hot melt or, in the cases of coated hot melts which are added directly to the melting pots, by virtue of the contamination resulting from the build-up over time of large quantities of the packaging materials in the melt pot and application equipment.

Commonly assigned U.S. Patent No. 5,373,682 significantly improved upon the state of the art by providing a packaging system and method for packaging hot melt adhesives wherein the hot melt adhesive is pumped or pored into a tube of plastic film in contact with a heat sink. When the hot melt adhesive is poured in its molten state into the plastic packaging film and then allowed to solidify, the adhesive fuses to some extent into the film, resulting in a non-blocking adhesive package which will melt faster in the melt pot and will not cause a build up of undesirable plastic residue even after extended periods of time. The intermingling of one or more of the hot melt components into the contact surface of the plastic film allows some mixing or compatibilizing of the film and the hot melt thereby improving the opportunity for more complete mixing of the hot melt and film when remelting of the packaged hot melt occurs. Such a method also provides an additional benefit over prior non-blocking packages in that the package itself is airtight allowing no air to be entrapped therein. The presence of entrapped air has been blamed for a variety of problems including incomplete melting and blending of the packaging material into the adhesive whereby the packaging material floats on the surface of the hot melt and/or adheres to the walls of the melt pot. The resultant adhesive package provides a readily handable adhesive in cartridge form which may, advantageously, be produced in a continuous line operation.

While the packaging system described and claimed in U.S. Patent No. 5,373,682 significantly advanced the state of the art, there continues to be a need for improvements and modification of such packaging systems leading to the wider applicability thereof.

### SUMMARY OF THE INVENTION

The invention provides a packaging system for low application temperature adhesives, in particular, adhesives and pressure sensitive adhesives which are applied at temperature below about 275°F down to about 150°F.

One aspect of the invention is directed to an encapsulated or packaged hot melt adhesive comprising a low temperature hot melt adhesive encapsulated within a film having a melting point below about 100°C. The encapsulating film is meltable together with the adhesive composition and blendable into the molten adhesive without deleteriously affecting the properties of the adhesive.

Another aspect of the invention is directed to a method of packaging a low temperature hot melt adhesive comprising wrapping a low temperature hot melt adhesive in a thermoplastic film having a melting point below about 100°C. In a preferred embodiment, the adhesive is in the molten state when wrapped. A particularly preferred method of the invention comprises pumping or pouring molten hot melt adhesive in liquid form into a cylindrical plastic film having a melting point of below about 100°C, the cylindrical tube being in direct contact with a heat sink. The adhesive is poured or pumped into the cylinder at a temperature at or above the melting point of the plastic film and the plastic film is meltable together with the adhesive composition and blendable into the molten adhesive. The molten hot melt adhesive filled cylinder is then sealed and allowed to cool.

In preferred embodiments of the invention, the encapsulating film is a copolymer of ethylene or propylene with methyl acrylate, n-butyl acrylate, vinyl acetate or other olefins or á-olefins. Ethylene methyl, acrylate and ethylene vinyl acetate are particularly preferred for use in the practice of the invention.

### BRIEF DESCRIPTION OF THE DRAWING FIGURE

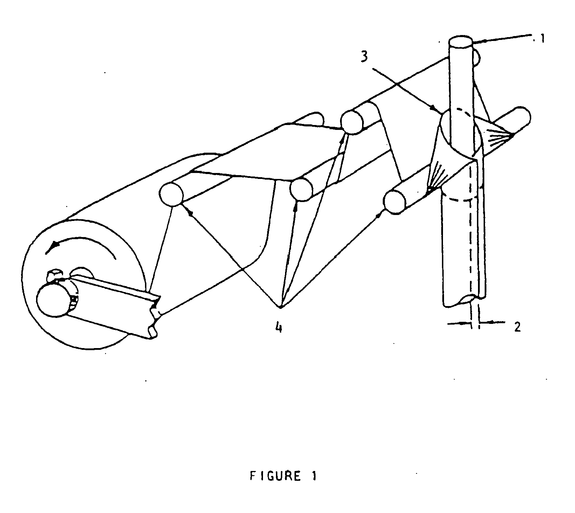

Figure 1 shows a cylindrical plastic tube formed for receipt of molten adhesive.

### DETAILED DESCRIPTION OF THE INVENTION

The invention provides a packaged low temperature hot melt adhesive and a method of encapsulating or packaging a low temperature hot melt adhesive.

Low temperature hot melt adhesive and low application temperature hot melt adhesive are used interchangeably herein and refer to an adhesive which can be processed at temperatures below about 275°F to as low as about 150°F.

One aspect of the invention is directed to an encapsulated or packaged hot melt adhesive comprising a low temperature hot melt adhesive encapsulated within a film having a melting point below about 100°C. The encapsulating film is meltable together with the adhesive composition and blendable into the molten adhesive without deleteriously affecting the properties of the adhesive.

Deleterious effects commonly caused by film packaging materials and which are avoided by using the packaging system described herein include raising the viscosity of the adhesive and thus affecting its processibility, migration of film to the surface of the adhesive and thereby reducing its pressure sensitive properties (tack and peel), and reducing the thermal stability of the adhesive (promoting discoloration, viscosity degradation or gelation).

The terms wrapped, encapsulated and packaged are used interchangeable herein and mean that blocks of adhesives are contained within a film that protects the adhesive from contamination, allows easy handling, may be shipped and stored without blocking and which can be processed without the removal of the film .

Non-blocking means that the individually wrapped adhesive blocks do not stick together in the packing case upon storage and shipment.

Blocks, sausages, and cartridges of adhesive are used interchangeably and refer to individually wrapped adhesive portions.

In one method of the invention a molten hot melt adhesive at from about 150°F to about 275°F is wrapped in a plastic film having a melting point below about 100°C. While the adhesive can be wrapped in the solid state, the adhesive is preferably wrapped in the molten state. Wrapping can occur either manually or, more preferably, by an automated procedure.

In a preferred method of the invention, packaging is accomplished by pumping or pouring molten hot melt adhesive in liquid form into a cylindrical thermoplastic film, the cylindrical tube being in direct contact with a heat sink, e.g., cooled water or a cooled liquid or gaseous environment. The adhesive being poured or pumped is at a temperature at or above the melting point of the plastic film and the plastic film is meltable together with the adhesive composition and blendable into the molten adhesive without deleteriously affecting the properties of the adhesive. The molten hot melt adhesive filled cylinder is sealed and allowed to solidify.

The thermoplastic film into which the molten adhesive is to be poured may be any film which is meltable together with the adhesive composition and blendable into said molten adhesive and which will not deleteriously affect the properties of the adhesive composition when blended therewith. Suitable thermoplastic materials are those with melting points below about 100°C but above about 50°C. In one embodiment of the invention the melting point is below about 90°C.

Film melting points are as determined by DSC (differential scanning calorimetry) using a DSC 2920 from TA Instruments. To determine film melting points, about 5 mg of film are sealed in a crimped aluminum pan. The instrument first heated the sample to 160°C, then cooled the sample to +60°C, and then reheated it to 160°C at 10°C/min for each step. The endothermic melting peak on the second heat up cycle was used to evaluate the melting point and heat of fusion. The melting point was taken as the temperature of the minimum in this endothermic melting peak (temperature of maximum heat absorption rate).

Preferably, the encapsulating film is a copolymer of ethylene or propylene with methyl acrylate, n-butyl acrylate, vinyl acetate or other olefins or á-olefins such as butene, hexene, octene or norbornene, ethylene copolymers with acrylic or vinyl esters, ethylene/carbon monoxide, and terpolymers. More preferred are copolymers of ethylene with methyl acrylate, n-butyl acrylate or vinyl acetate, in particular those comprising greater than 10% of the comonomer, preferably from about 10 to about 45% comonomer. Ethylene methyl acrylate and ethylene vinyl acetate are particularly preferred for use in the practice of the invention. Films which may be used to practice the invention are commercially available from ExxonMobil under the trade name Optema TC 114 (ethylene methyl - acrylate comprising 18% methyl acrylate) and Escorene LD706 (ethylene vinyl acetate comprising 15.3% vinyl acetate).

The films may, if desired, contain antioxidants for enhanced stability as well as other optional components including slip agents such as erucamide, anti-blocking agents such as diatomaceous earth, fatty amides or other processing aids, anti-stats, stabilizers, plasticizers, dyes, perfumes, fillers such as talc or calcium carbonate and the like. In a preferred embodiment the film contains at least a slip agent and an antiblocking agent. Typically the film will contain about 3,000 ppm of a slip agent and about 14,000 ppm of an antiblocking agent.

The method of the present invention is adaptable to the packaging of virtually any type of hot melt adhesive composition and specifically low temperature hot melt adhesives as defined herein, in particular hot melt adhesives which are applied at a temperature of from about 250°F to about 190°F, more preferably from about 225°F or below. Included are hot melt adhesives prepared from polymers and copolymers of synthetic resins, rubbers, polyethylene, polypropylene, polyurethane, acrylics, vinyl acetate, ethylene vinyl acetate and polyvinyl alcohol. More specific examples include hot melt adhesives prepared from rubber polymers such as block copolymers of monovinyl aromatic hydrocarbons and a conjugated diene, e.g., styrene-butadiene, styrene-butadiene-styrene, styrene-isoprene-styrene, styrene-ethylene-butylene-styrene and styrene-ethylene propylene-styrene; ethylene-vinyl acetate polymers, other ethylene esters and copolymers, e.g., ethylene methacrylate, ethylene n-butyl acrylate and ethylene acrylic acid; polyolefins such as polyethylene and polypropylene; polyvinyl acetate and random copolymers thereof; polyacrylates; polyamides; polyesters; polyvinyl alcohols and copolymers thereof; polyurethanes; polystyrenes; polyepoxides; graft copolymers of vinyl monomer(s) and polyalkylene oxide polymers; and aldehyde containing resins such as phenol-aldehyde, urea-aldehyde, melamine-aldehyde and the like.

Most often such adhesives are formulated with tackifying resins in order to improve adhesion and introduce tack into the adhesive. Such resin include, among other materials, natural and modified rosins, polyterpene resins, phenolic modified hydrocarbon resins, coumarone-indene resins, aliphatic and aromatic petroleum hydrocarbon resins, phthalate esters and hydrogenated hydrocarbons, hydrogenated rosins and hydrogenated rosin esters.

Optional ingredients include diluents, e.g. , liquid polybutene or polypropylene, petroleum waxes such as paraffin and microcrystalline waxes, polyethylene greases, hydrogenated animal, fish and vegetable fats, mineral oil and synthetic waxes as well as hydrocarbon oils such as naphthionic or paraffinic mineral oils, stabilizers, antioxidants, colorants and fillers. The selection of components and amounts as well as the preparation thereof are well known in the art and described in the literature.

The thickness of the film used to wrap the adhesive will generally vary from between about 0.1 mil to about 5 mil, preferably from about 0.5 mil to about 4 mil. The thickness of the particular film also varies depending upon the temperature at which the molten adhesive is pumped or poured into the plastic film cylinder. The particular viscosity at which the adhesive can be introduced into the plastic film cylinder will vary depending on a variety of factors including the pumping capacity of the pump, the strength of the plastic film and the like. Viscosities in the range of 1,000 to 200,000 cps, preferably 2,000 to 100,000 may be utilized, more preferably the viscosity of the adhesive which is to be packaged in accordance with the invention is between 3,000 and 25,000 cps. It will be recognized that the temperature at which an adhesive composition will exhibit this viscosity range will vary from one adhesive to another.

It is further preferred that the thermoplastic film comprise not more than about 1.5% by weight of the total adhesive mass and that it optimally vary from 0.1 to 1.0% by weight of the mass in order to prevent undue dilution of the adhesive properties.

The packaging method of the invention may itself be practiced in much the same way as described in commonly assigned U.S. Patent No, 5,373,682, the disclosure of which is incorporated herein in its entirety by reference. Basically, and as shown in drawing Figure 1 wherein the roll of film is loaded to unroll in the direction shown by the arrow and the film is threaded through the idler rollers (4) and over the film folder (3), a continuous supported cylindrical tube is formed by wrapping the plastic film around an, e.g., 1.5 inch diameter, insulated mandrel (1) or fill pipe. After the lap seam (2) is formed, it is sealed using hot air and then set by spraying with ambient temperature air. The molten hot melt adhesive is pumped therein through a nozzle while the entire surface of the film is sprayed with chilled water (5°C to 10°C). The filled tubes are voided at a desired length, e.g., 6 inches, and then cut to form individual cartridges. The resulting cartridges are allowed to cool in a chilled water bath until they have completely solidified and can be packaged in appropriate shipping containers.

The heat sink which is used in the method disclosed and claimed in commonly assigned U.S. Patent No. 5,373,682 may also be used in the practice of the invention described herein. The heat sink comprises any means which will effectively and rapidly remove or absorb the excess heat from the entire surface of the film which is in contact with the molten hot melt adhesive composition so as to prevent the temperature of the film from exceeding its melting point even though the molten hot melt adhesive temperature is higher than the film melting temperature. Suitable heat sinks are provided by spraying the surface of the cylindrical plastic tube with cooled water or other refrigerant means such as chilled glycol, liquid or gaseous nitrogen, compressed carbon dioxide or the like. The spraying may be accomplished, for example, using a series of spray nozzles aimed at the mandrel or a water or cooling ring or series of rings may be positioned around the mandrel so as to provide a curtain or cascade of water or refrigerant around the entire circumference of the cylinder.

As discussed above, the molten adhesive is generally poured or pumped into the plastic film cylinder at a temperature at which the molten adhesive exhibits a viscosity of 1,000 to 200,000, preferably 3,000 to 25,000 cps. This temperature will generally vary depending upon the particular adhesive. After filling, the adhesive cartridges, either individually or in a connected series, are further cooled to ambient temperature prior to bulk packaging. Cooling to room temperature may be accomplished entirely under ambient conditions, in a chilled air environment or may be hastened by submersion of the cartridges into a bath of cooled water, glycol, liquid nitrogen or the like.

Since the adhesive is pumped or poured continuously through the mandrel into the plastic film cylinder, it is possible to void and then cut the continuous filled tube into individual cartridges at virtually any desired length. In general, the individual cartridges are produced in a variety of sizes ranging from about 3 inches to about 18 inches or more in length and varying in weight, depending upon length, from about 0.5 to five pounds.

The resultant individually packaged hot melt adhesive cartridges can be stored, handled and used without any problems of the individual blocks sticking together, adhering to other objects, or becoming contaminated even if exposed to increased pressure and/or temperature.

When it is desired to ultimately utilize the adhesive, the entire wrapped cartridge is added to the melt pot. An advantage of a preferred embodiment of the method of the invention is the fact that the adhesive is poured or pumped into the plastic film cylinder in its molten form creates some degree of fusion between the adhesive and the film. Because of this fusion, very little additional energy is required to melt and blend the film into the adhesive itself. Further, the absence of any entrapped air results in a homogeneous melting of the adhesive with no plastic film undesirably separating from the wrapped adhesive and floating to the surface and/or sides of the melting pot.

This strong interface or interphase between the adhesive and film which is formed by virtue of the melt-filling process also helps prevent the packaging film from floating or sinking in the hot melt pot due to a difference in density between the film and the adhesive or entrapped air at the interface.

The thus packaged hot melt adhesive cartridge may, of course, additionally be packaged in a second outer container to further reduce its exposure to the environment, moisture or other contaminants. The secondary wrappings would then be removed by conventional procedures prior to utilization of the hot melt adhesive.

The following examples are presented for purpose of illustration and not limitation.

### EXAMPLES

### Example 1

A rubber-based pressure sensitive hot melt adhesive suitable for applying at low temperature (190°-250°F) was prepared using conventional mixing equipment. This adhesive has a softening point of 140°F and a melt viscosity of about 6,000 cps at 225°F.

A continuous supported cylindrical tube was formed by wrapping a plastic film comprising a 1.5 mil film of Optema TC 114 around a 1.5 inch diameter insulated mandrel or fill pipe. After the lap seam was formed, it was sealed using hot air and then set by spraying with ambient temperature air.

The molten hot melt adhesive, at a viscosity of 6,000 cps (107°C) was pumped therein through a nozzle while the entire surface of the film was sprayed with chilled water (5-10°C). The filled tubes were voided at lengths of 12 inches and then cut to form individual cartridges. The resultant cartridges were allowed to cool in a chilled water bath until they had completely solidified and could be packaged in appropriate shipping containers.

The resultant cartridges had a film add-on content of about 0.31% and were characterized in that the plastic wrapping film was fused into the hot melt adhesive composition and, except for the area of the lap seam, could not be physically separated therefrom. The sausages packed in boxes for shipment did not block together during shipment.

### Example 2

Blocks (500gms, -4 inches x 4 inches x 2½ inches) of hot melt adhesive used in example 1 and suitable for use in diaper manufacturing were hand wrapped with Optema TC 114 film and tested in a coater (J&M Lab Coater). The film melted down readily at 210°F and had no effect on the sprayability of the product when sprayed continuously for 90 minutes during which 9 blocks of adhesive were consumed. Throughout, the adhesive sprayed identically to the film-free material. Blocks held at 105°F for 6 days became tacky on the outside, although they could still be separated without tearing the film.

### Example 3

0.5kg blocks of Etimelt 257, an EVA-based hot melt adhesive suitable for use in labeling applications and available from National Starch and Chemical Company, Bridgewater, NJ, were packaged in 10.5 x 6 inch widths of Optema TC 114 film in the molten state. Aging, film dispersibility adhesion, and blocking test were conducted.

Adhesion: The film adhered well to the adhesive block at from 4-40°C. The resulting cartridges are characterized in that the plastic wrapping film is fused into the hot melt adhesive composition and, except for the area of the lap seam, could not be physically separated. The film could be slightly peeled off from the side where it was sealed but the seal is of good quality. At -16°C, it is possible to remove the film but not easily.

Aging. Etimelt 257 blocks without film were first melted in a glass jar and then blocks of Etimelt 257 with film and without film were added before leaving them to age for 72 hours at 160°C. Observations at 72 hours are shown in Table 1.

**Table 1**

| Blocks added Observations | |
|---|---|
| Etimelt 257 without film no blooming | Amber color, no ring, no char, |
| Etimelt 257 + Optema TC 114 film wrapped in molten state dispersed | Amber color, no ring, no char no blooming, film fully |
| Etimelt 257 + Optema TC 114 film manually wrapped dispersed | Amber color, no ring, no char no blooming, film fully |

Blocking test: A 12.5kg cardboard box full of 30 blocks of Etimelt 257 Optema TC 114 stacked 4 to 5 blocks high was aged at 43°C for 72 hours. At 72 hours none of the blocks were sticking to each other or to the box. No flow phenomenon was observed on any of the blocks. While the last layer of the blocks exhibited a higher residual tack, the tack was insufficient to cause the blocks to stick to each other or to the box.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

Further embodiments of the present invention are the following:
1. A packaged low temperature hot melt adhesive comprising a low temperature hot melt adhesive encased in a thermoplastic film having a melting point below about 100°C.
2. The packaged adhesive of embodiment 1 wherein the film has a melting point below about 90°C.
3. The packaged adhesive of embodiment 1 wherein the film comprises a copolymer of ethylene or propylene with another comonomer.
4. The packaged adhesive of embodiment 3 wherein the film comprises a copolymer of ethylene with from about 10 to about 45% methyl acrylate, n-butyl acrylate or vinyl acetate comonomers.
5. The packaged adhesive of embodiment 4 wherein the film comprises ethylene methyl acrylate.
6. The packaged adhesive of embodiment 4 wherein the film comprises ethylene vinyl acetate.
7. The packaged adhesive of embodiment 5 wherein the film comprises more that 10% methyl acrylate comonomer.
8. The packaged adhesive of embodiment 6 wherein the film comprises more than about 10% of vinyl acetate comonomer.
9. The packaged adhesive of embodiment 3 wherein the film further comprises an antiblocking agent.
10. A method of packaging a low temperature hot melt adhesive comprising wrapping a low temperature hot melt adhesive in a thermoplastic film having a melting point below about 100°C.
11. The method of embodiment 10 wherein the film has a melting point below about 90°C
12. The method of embodiment 10 wherein the adhesive is wrapped in the molten state.
13. The method of embodiment 12 wherein the molten hot melt adhesive is pumped or poured into a cylindrical plastic film having a melting point of below about 100°C, the cylindrical tube being in direct contact with a heat sink, the molten hot melt adhesive filled cylinder is sealed and allowed to cool.
14. The method of embodiment 11 wherein the film comprises a copolymer of ethylene or propylene with another comonomer.
15. The method of embodiment 14 wherein the film comprises a copolymer of ethylene with from about 10 to about 45% methyl acrylate, n-butyl acrylate or vinyl acetate comonomers.
16. The method of embodiment 15 wherein the film comprises ethylene methyl acrylate.
17. The method of embodiment 15 wherein the film comprises ethylene vinyl acetate comonomer.
18. The method embodiment 17 wherein the film comprises more that 10% methyl acrylate comonomer.
19. The method of embodiment 17 wherein the film comprises more than about 10% of vinyl acetate comonomes.
20. The method of embodiment 14 wherein the film further comprises an antiblocking agent.

## Claims

1. A method of packaging a low application temperature hot melt adhesive, which adhesive is processable at temperatures below 135°C to as low as 66°C, **characterized in** pumping or pouring the adhesive in a molten state into a cylindrical tube of plastic film having a melting point of below 90°C, the cylindrical tube being in direct contact with a heat sink, the molten adhesive being pumped or poured into said tube at a temperature at or above the melting point of the plastic film while the surface of the tube is sprayed with chilled water, sealing the molten adhesive filled cylinder and allowing the filled cylinder to cool.

2. The method of claim 1 wherein the film comprises a copolymer of ethylene or propylene with another comonomer.

3. The method of claim 2 wherein the film comprises a copolymer of ethylene with from 10 to 45% methyl acrylate, n-butyl acrylate or vinyl acetate comonomers.

4. The method of claim 3, wherein the film comprises ethylene methyl acrylate.

5. The method of claim 3 wherein the film comprises ethylene vinyl acetate comonomer.

6. The method claim 4 wherein the film comprises more than 10% methyl acrylate comonomer.

7. The method of claim 5 wherein the film comprises more than 10% of vinyl acetate comonomers.

8. The method of claim 2 wherein the film further comprises an antiblocking agent.
